(19) Europäisches Patentamt / European Patent Office / Office européen des brevets

(11) **EP 1 304 647 B1**

(12) **FASCICULE DE BREVET EUROPEEN**

(45) Date de publication et mention
de la délivrance du brevet:
**12.12.2007 Bulletin 2007/50**

(51) Int Cl.:
*G06K 9/00* (2006.01)      *G06K 9/46* (2006.01)

(21) Numéro de dépôt: **02354159.2**

(22) Date de dépôt: **16.10.2002**

(54) **Codage d'informations concentriques**

Kodierung von konzentrischen Daten

Coding of concentric data

(84) Etats contractants désignés:
**DE FR GB IT**

(30) Priorité: **19.10.2001 FR 0113522**

(43) Date de publication de la demande:
**23.04.2003 Bulletin 2003/17**

(73) Titulaire: **STMicroelectronics S.A.**
**92120 Montrouge (FR)**

(72) Inventeurs:
• **Tisse, Christel-Loic**
**13380 Plan de Cuques (FR)**
• **Barbeyrac, Damien**
**13080 Luynes (FR)**

(74) Mandataire: **de Beaumont, Michel**
**Cabinet Michel de Beaumont**
**1, rue Champollion**
**38000 Grenoble (FR)**

(56) Documents cités:
• **DAUGMAN J: "HIGH CONFIDENCE RECOGNITION OF PERSONS BY RAPID VIDEO ANALYSIS OF IRIS TEXTURE" ECOS. EUROPEAN CONVENTION ON SECURITY AND DETECTION, XX, XX, 16 mai 1995 (1995-05-16), pages 244-251, XP000671918**
• **HAVLICEK J P ET AL: "The analytic image" IMAGE PROCESSING, 1997. PROCEEDINGS., INTERNATIONAL CONFERENCE ON SANTA BARBARA, CA, USA 26-29 OCT. 1997, LOS ALAMITOS, CA, USA,IEEE COMPUT. SOC, US, 26 octobre 1997 (1997-10-26), pages 446-449, XP010253992 ISBN: 0-8186-8183-7**
• **BINGHAM C. ET AL: "Modern Techniques of Power Spectrum Estimation" IEEE TRANS. ON AUDIO AND ELECTRONICS, [en ligne] vol. AU-15, no. 2, juin 1967 (1967-06), pages 55-66, XP002205211 Extrait de l'Internet: <URL:http://qss.stanford.edu/~godfrey/stat istics/mtpse.pdf> [extrait le 2002-07-09]**
• **"Windowing Method" MATLAB DOCUMENTATION - IMAGE PROCESSING TOOLBOX, [en ligne] 8 mars 2001 (2001-03-08), page 1 XP002205212 Extrait de l'Internet: <URL:http://www.mathworks.com/access/helpd esk/help/toolbox/images/linfil11.shtml> [extrait le 2002-07-09] & "Wayback Machine : Searching Page" THE INTERNET ARCHIVE: BUILDING AN 'INTERNET LIBRARY', [en ligne] page 1 Extrait de l'Internet: <URL:http://web.archive.org/web/*/http://w ww.mathworks.com/access/helpdesk/help/tool box/images/linfil11.shtml> [extrait le 2002-07-09]**
• **GRAHAM J R: "Windowing and the DFT" FOURIER TRANSFORMS & THE FREQUENCY DOMAIN, [en ligne] 22 février 2001 (2001-02-22), pages 1-3, XP002205213 Extrait de l'Internet: <URL:http://astron.berkeley.edu/~jrg/ngst/ fft/window.html> [extrait le 2002-07-09] & "Wayback Machine : Searching Page" THE INTERNET ARCHIVE: BUILDING AN 'INTERNET LIBRARY', [en ligne] page 1 Extrait de l'Internet: <URL:http://web.archive.org/web/*/http://a stron.berkeley.edu/~jrg/ngst/fft/window.ht ml> [extrait le 2002-07-09]**

## Description

La présente invention concerne un procédé de codage d'un élément annulaire d'une image numérique. Plus particulièrement, la présente invention concerne un procédé de codage d'un tel élément dans lequel l'information "utile" est annulaire ou circulaire, c'est-à-dire dont les informations à coder varient essentiellement selon la position angulaire dans des cercles concentriques.

Un exemple d'application de la présente invention est le codage d'un iris d'un oeil dans une image numérique lors d'un procédé de reconnaissance. D'une part, l'iris d'un oeil est un élément annulaire délimité par la cornée et la pupille. D'autre part, un iris est caractérisé par sa texture qui est un ensemble de motifs tridimensionnels de creux et de bosses, chaque motif ayant dans l'iris une direction radiale. Une telle texture se traduit, lors de l'acquisition numérique bidimensionnelle, par l'alternance de zones claires et foncées. La variation de la texture dans l'iris depuis le bord de la pupille vers la cornée selon une direction radiale est très faible. Les informations caractéristiques de la texture de l'iris varient essentiellement selon la position angulaire de cercles concentriques.

Pour permettre une reconnaissance d'iris relativement rapide, plutôt que de comparer point par point une image traitée à des images de référence, on a proposé divers procédés d'extraction de sa texture.

Un premier procédé connu consiste, comme cela est exposé dans le brevet américain 5 572 596 et dans la demande internationale 00/62239, à décomposer la texture de l'image numérique en ondelettes. En pratique, cette décomposition en ondelettes ou sous-bandes est mise en oeuvre à l'aide de cellules de filtrage appliquées sur les coordonnées spatiales de l'image et choisies pour isoler les basses fréquences des hautes fréquences. Après chaque filtrage, on effectue une décimation (ou sous-échantillonnage par deux) limitant ainsi la complexité de calculs sans perdre d'information. Toutefois, cette forme de codage en sous-bandes impose le recours à un stockage en mémoire important pour conserver l'information significative de la texture de l'image numérique.

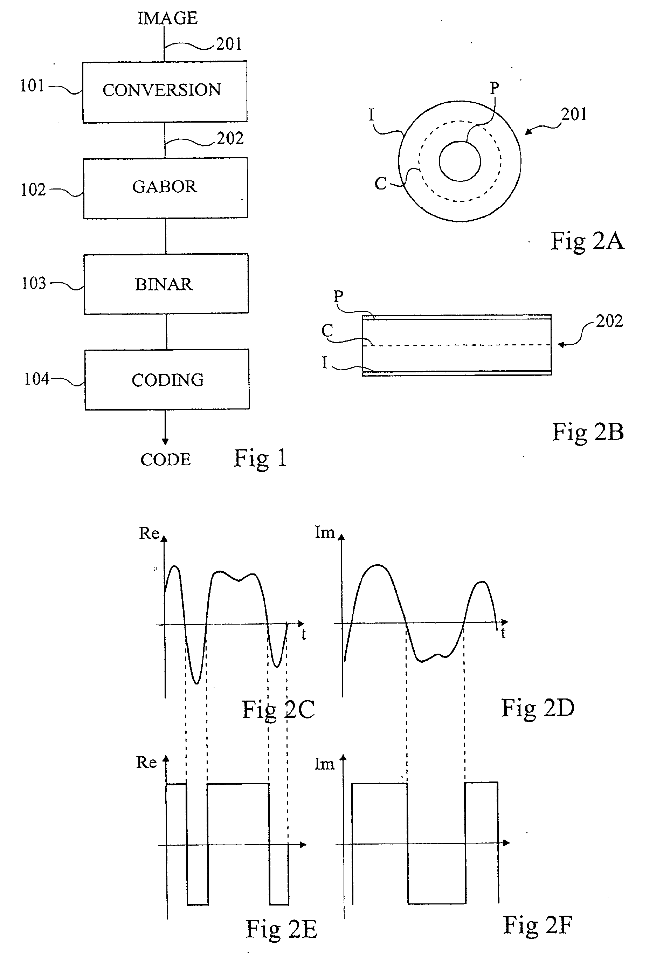

La figure 1 illustre schématiquement, sous forme d'un schéma-blocs, un autre procédé connu de codage d'un iris qui consiste à effectuer une décomposition spectrale locale par un ensemble de filtres passe-bandes, généralement des filtres de Gabor.

On considère une image numérique d'un oeil IMAGE dans laquelle on a préalablement localisé l'iris à coder. Dans un premier temps, bloc 101 (CONVERSION), la forme générale annulaire de l'iris est transformée sous forme rectangulaire droite. Ceci est effectué en convertissant les coordonnées cartésiennes de l'iris en coordonnées polaires, au moyen d'une conversion polaire.

La figure 2A illustre schématiquement un anneau iridien 201, délimité par un cercle pupillaire P et par la limite circulaire I entre l'iris et la cornée. On considère un cercle intermédiaire C entre les limites I et P. Le cercle C comporte les informations à coder.

Par la conversion 101, l'anneau iridien 201 est transformé en une image rectangulaire 202 illustrée en figure 2B, dans laquelle les données du cercle C sont maintenant réparties sur une ligne, par exemple horizontale.

À l'étape suivante, bloc 102 (GABOR), on sélectionne un nombre de lignes de l'image et un nombre de points dans ces lignes et on applique aux valeurs discrètes retenues, généralement l'intensité (niveau de gris) des pixels, un filtrage au moyen d'un filtre de Gabor (passe-bandes). Le choix des fréquences centrales des bandes et de la largeur des bandes passantes est effectué en fonction d'un compromis entre les contraintes de précision de l'information extraite du filtrage et son caractère significatif. En général, afin d'obtenir des résultats fiables, les points de chacune des lignes sélectionnées font l'objet d'un filtrage sur trois domaines de fréquences. Par fréquence, on entend ici une fréquence relative exprimée en cycles par image, c'est-à-dire qui se réfère aux dimensions de l'image initiale. Les informations extraites ne dépendent donc pas des conditions de numérisation, ce qui permet une comparaison ultérieure directe entre une image traitée et une image de référence.

Le filtre de Gabor utilisé est un filtre complexe. Pour chacune des fréquences centrales du filtre, on obtient donc après filtrage, des informations analogiques quant aux parties réelle Re et imaginaire Im des produits du filtrage. La composante continue étant éliminée par le filtrage, les informations obtenues varient autour de la référence utilisée. Les figures 2C et 2D illustrent respectivement un exemple de variation de la partie réelle Re et de la partie imaginaire Im en fonction du temps t sur une partie d'une ligne de l'image.

A l'étape suivante 103 (BINAR), illustrée en figure 2E et 2F, les données précédentes Re et Im sont transformées en des données binaires.

Ensuite, bloc 104 (CODING), les données binaires sont codées en prenant en compte la phase (l'information étant dans la direction angulaire). Le codage de la phase est possible du fait que le filtre de Gabor est un filtre complexe et que les parties réelle et imaginaire du filtre sont en quadrature. En effet, c'est ce qui permet de considérer que le rapport des parties réelle Re et imaginaire Im est égal à la tangente de la phase.

Les codes ainsi obtenus pour chacune des lignes ou points traités sont ensuite utilisés pour tout traitement approprié, par exemple, une comparaison à des codes de référence pour permettre une reconnaissance d'iris. Un exemple de procédé connu de codage de la phase locale est décrit dans le brevet américain N° 5 291 560.

Un inconvénient d'un procédé à filtres de Gabor réside dans le fait qu'il impose de nombreux calculs lors du filtrage, liés à la nature même des filtres utilisés. En effet, la taille des noyaux de convolution par rapport à la taille de l'image à convoluer (même après troncature de l'enveloppe gaussienne caractéristique des filtres de Gabor) et la structure complexe comportant une partie réelle et une partie imaginaire, des filtres rendent les temps de calcul longs.

Un autre inconvénient est que la précision du codage obtenu est directement liée au nombre de calculs. Par conséquent, si on souhaite plus d'informations pour discriminer deux images, on doit accroître le nombre et le temps de calcul.

La présente invention vise à proposer un procédé de codage d'informations à répartition essentiellement circulaire dans un élément annulaire, qui soit plus rapide que les procédés connus.

La présente invention vise également à proposer un tel procédé qui fournit un codage contenant plus d'informations, donc des résultats plus fiables que les procédés connus, sans accroître la quantité de calculs.

La présente invention vise également à proposer un tel procédé applicable au codage d'un iris d'un oeil dans une image numérisée.

La présente invention vise en outre à proposer un filtre qui permet de coder des informations à répartition essentiellement circulaire dans un élément annulaire qui soit plus simple que les filtres couramment utilisés. En particulier, l'invention vise à produire un tel filtre qui permet d'obtenir simplement et rapidement un code en phase, fréquence et module.

Pour atteindre ces objets et d'autres, la présente invention prévoit un procédé de codage en fréquence, module et phase d'une représentation numérique, dans le domaine spatial, d'un élément annulaire, comportant les étapes suivantes :

appliquer à tout point de l'élément une conversion polaire à angle constant, d'où il résulte que l'élément est déplié sous forme rectangulaire ;

transférer, dans le domaine fréquentiel, tout point de la forme rectangulaire convertie au moyen d'une transformée de Fourier ;

filtrer les données discrètes résultant du transfert au moyen d'au moins un filtre passe-bande, réel, bidimensionnel, orienté selon l'axe des phases ;

appliquer une transformée de Hilbert aux résultats du filtrage ;

appliquer une transformée de Fourier inverse aux résultats de la transformée de Hilbert ; et

extraire des informations de phase et de module, dans le domaine spatial.

Selon un mode de réalisation de la présente invention, le filtre passe-bande, réel, bidimensionnel, orienté selon l'axe des phases est le produit de deux fenêtres de Hamming unidimensionnelles, la fonction de transfert de chacune de ces fenêtres étant nulle partout, sauf dans un domaine de fréquence restreint autour d'une fréquence centrale dans lequel son expression analytique est la suivante :

$$Y_{i,k}(f_k) = \alpha_{i,k} + (1 - \alpha_{i,k})\cos\frac{\pi\left(f_k - fq_{i,k}\right)}{f0_{i,k}},$$

où

i représente l'indice du filtre parmi une série (par exemple trois) de filtres utilisés ;

k désigne la direction de la fenêtre de Hamming considérée (k=1 ou 2) ;

$f_k$ est la fréquence courante ;

$\alpha_{i,k}$ est un nombre réel non nul, positif et strictement inférieur à 1, appelé coefficient de forme ;

$fq_{i,k}$ est la fréquence centrale du filtre monodimensionnel, passe-bande dans la direction k et d'indice i dans la série de filtres ; et

$f0_{i,k}$ fixe l'étalement spectral centré sur la fréquence $fq_{i,k}$.

Selon un mode de réalisation de la présente invention, les fenêtres de Hamming ont des coefficients $\alpha_{i,k}$ identiques.

Selon un mode de réalisation de la présente invention, les fenêtres de Hamming sont des fenêtres de Hanning pour lesquelles les coefficients $\alpha_{i,k}$ identiques valent 0,54.

Selon un mode de réalisation de la présente invention, les fenêtres de Hamming ont des coefficients $\alpha_{i,k}$ différents.

Selon un mode de réalisation de la présente invention, le filtre passe-bande réel, bidimensionnel, orienté selon l'axe des phases présente une bande passante à -3 dB d'une largeur d'une octave.

Selon un mode de réalisation de la présente invention, la bande passante de chacune des fenêtres de Hamming est définie par :

$$f0_{i,k} = \frac{\pi}{3\arccos\left(\dfrac{\dfrac{1}{2} - \alpha_{i,k}}{1 - \alpha_{i,k}}\right)} fq_{i,k},$$

où arcos désigne la fonction inverse de cosinus.

Selon un mode de réalisation de la présente invention, le procédé consiste à appliquer trois filtres passe-bande, réels, bidimensionnels, orientés selon l'axe des informations caractéristiques de l'image rectangulaire de fréquences centrales différentes.

La présente invention prévoit également un procédé de codage, dans une image numérique, d'une texture d'un élément annulaire défini par l'inclusion d'un premier cercle de rayon relativement faible dans un second cercle de rayon relativement grand, caractérisé en ce qu'il consiste à mettre en oeuvre le procédé de l'un quelconque des modes de réalisation précédents.

Selon un mode de réalisation de la présente invention, l'anneau est un iris d'un oeil, le premier cercle étant la pupille dudit oeil et le second cercle étant la limite entre l'iris et la cornée de l'oeil.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 illustre, par un organigramme, la séquence d'étapes d'un procédé de codage d'iris connu ;
les figures 2A à 2F illustrent la mise en oeuvre de certaines étapes du procédé de la figure 1 ;
La figure 3 illustre, par un organigramme, la séquence d'étapes d'un procédé de codage d'iris selon un mode de réalisation de la présente invention ; et
la figure 4 illustre la fonction de transfert d'un filtre selon un mode de réalisation de la présente invention.

Par souci de clarté, les mêmes éléments ont été désignés par les mêmes références aux différentes figures. De plus, les figures 2A à 2F ne sont pas tracées à l'échelle.

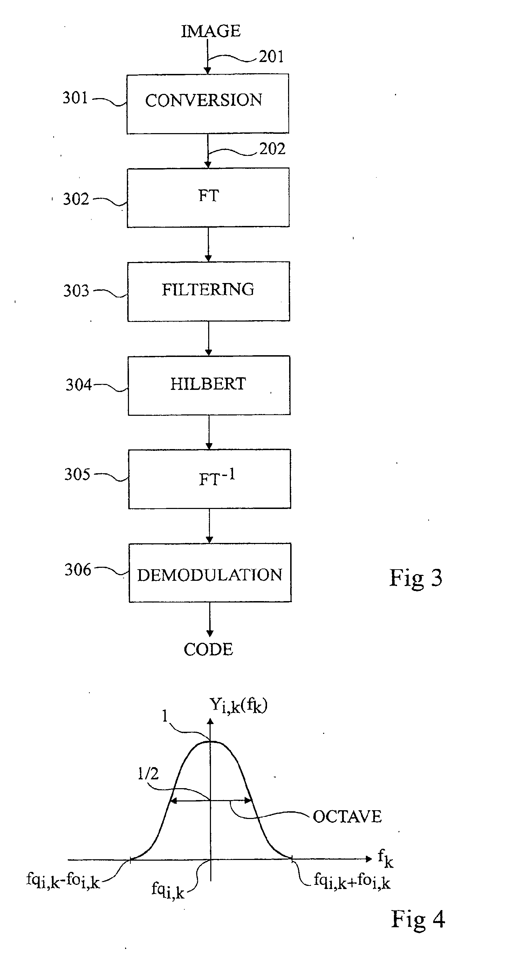

Un mode de codage d'un iris ou de tout autre élément annulaire comportant une texture, c'est-à-dire des informations caractéristiques variant de façon plus importante sur des cercles concentriques que selon des directions radiales, est décrit ci-après en relation avec les figures 3 et 4.

Une image numérique IMAGE à traiter comporte un élément annulaire, ici un iris, à coder similaire à celui décrit précédemment en relation avec la figure 2A.

Dans un premier temps, bloc 301 (CONVERSION), la forme générale annulaire de l'iris est transformée en une forme rectangulaire 202 de la figure 2B. Ceci est effectué en convertissant les coordonnées cartésiennes de l'iris en coordonnées polaires, au moyen d'une conversion polaire.

À l'étape suivante, bloc 302 (FT), l'image convertie 202 de la figure 2B est transférée du domaine spatial au domaine fréquentiel par une transformée de Fourier. On utilise généralement une transformée de Fourier rapide (Fast Fourier Transform).

Ensuite, bloc 303 (FILTERING), les valeurs discrètes obtenues par la transformée de Fourier, font l'objet d'un filtrage au moyen d'un filtre à deux dimensions, réel et orienté dans le sens des informations caractéristiques de l'image rectangulaire texturée.

Selon un mode de réalisation préféré de la présente invention, on utilise un filtre dont la fonction de transfert $X_i(f1,f2)$ résulte du produit de deux fenêtres de Hamming $Y_{i,1}(f_1)$ et $Y_{i,2}(f_2)$ ($X_i(f_1,f_2)= Y_{i,1}(f_1).Y_{i,2}(f_2)$), où $f_1$ et $f_2$ désignent les fréquences dans les deux directions du filtre bidimensionnel. La fonction de transfert $Y_{i,k}(f_k)$ d'une fenêtre de Hamming, illustrée en figure 4, est nulle partout, sauf dans un domaine de fréquence restreint autour d'une fréquence centrale dans lequel son expression analytique est la suivante :

$$Y_{i,k}(f_k) = \alpha_{i,k} + (1 - \alpha_{i,k})\cos\frac{\pi\left(f_k - fq_{i,k}\right)}{f0_{i,k}},$$

où
i représente l'indice du filtre parmi une série (par exemple trois) de filtres utilisés ;
k désigne la direction de la fenêtre de Hamming considérée (k=1 ou 2) ;

$f_k$ est la fréquence courante, comprise entre $fq_{i,k}-f0_{i,k}$ et $fq_{i,k}+f0_{i,k}$ ;

$\alpha_{i,k}$ est un nombre réel non nul, positif et strictement inférieur à 1, appelé coefficient de forme ;

$fq_{i,k}$ est la fréquence centrale du filtre monodimensionnel, passe-bande dans la direction k et d'indice i dans la série du filtre ; et

$f0_{i,k}$ fixe l'étalement spectral centré sur la fréquence $fq_{i,k}$.

Selon un mode de réalisation, les deux fenêtres de Hamming $Y_{i,1}$ et $Y_{i,2}$ du filtre bidimensionnel ont des coefficients de forme $\alpha_{i,1}$ et $\alpha_{i,2}$ identiques. De préférence, les fenêtres de Hamming sont alors des fenêtres de Hanning pour lesquelles le coefficient de forme $\alpha_{i,k}$ vaut 0,54.

En variante, les deux fenêtres de Hamming $Y_{i,1}$ et $Y_{i,2}$ du filtre bidimensionnel ont des coefficients de forme $\alpha_{i,1}$ et $\alpha_{i,2}$ différents l'un de l'autre.

Selon un mode de réalisation particulier de la présente invention, dans le cas de coefficients de forme $\alpha_k$ identiques, le filtre présente une bande passante à -3 dB d'une largeur d'une octave suivant les deux directions (verticale et horizontale) de l'image.

Alors, dans le mode de réalisation préféré utilisant le produit de deux fenêtres de Hanning, avec les notations précédentes, la bande passante à -3 dB du filtre d'une octave est obtenue si la valeur $f0_{i,k}$ par rapport à la fréquence centrale $fq_{i,k}$ est la suivante :

$$f0_{i,k} = \frac{\pi}{3\arccos\left(\dfrac{\dfrac{1}{2} - \alpha_{i,k}}{1 - \alpha_{i,k}}\right)} fq_{i,k},$$

où arcos désigne la fonction inverse de cosinus.

On applique le filtre bidimensionnel passe-bande de bande passante d'une octave à -3 dB ainsi obtenu, de préférence, pour plusieurs fréquences centrales $fq_{i,k}$ différentes.

En choisissant trois fréquences centrales réparties de façon à être séparées d'une octave (par exemple, 7, 14 et 28 cycles par image), on couvre l'ensemble du domaine spectral contenant les informations. Les trois filtres sont appliqués séparément à l'image rectangulaire de l'iris. On obtient trois images résultats.

À l'étape suivante, bloc 304 (HILBERT), on applique aux résultats des filtrages précédents une transformée de Hilbert. On obtient alors la transformée de Fourier d'une extension complexe ou image analytique discrète, conformément aux enseignements de l'article "The analytic Image" de J.P. Havlicek et al, IEEE 1997 pages 446-449, et comme cela a été détaillé dans l'ouvrage "Handbook of image and video processing" de A. Bovic paru en 2000.

Ensuite, on applique une transformée de Fourier inverse bloc 305 (FT$^{-1}$) à la transformée de Fourier de l'image analytique pour revenir dans le domaine spatial.

Pour chaque bande passante du domaine fréquentiel, c'est-à-dire autour de chaque fréquence centrale $fq_{i,k}$, les informations de module $a_i(x_0,y_0)$, de phase instantanée $\varphi_i(x_0,y_0)$ et de fréquence émergente $\Delta\varphi_i(x_0,y_0)$, sont alors extraites, bloc 306 (DEMODULATION), dans le domaine spatial, au moyen de procédés standards de démodulation. De tels procédés sont décrits par exemple dans "Discrete quasi eigenfunction approximation for AM-FM image analysis" de J.P. Havlicek et al, IEEE, 1996, pages 633-636 ou dans "The multi-component AM-FM image representation", de J.P. Havlicek et al, IEEE transactions on image processing, juin 1996, pages 1094-1096.

Bien que le procédé selon la présente invention semble plus long et plus difficile à mettre en oeuvre que les procédés connus, il n'en est rien. En effet, les séquences de calculs mises en jeu par ce procédé utilisent avantageusement des opérations plus simples que les procédés connus et qui requièrent moins de temps de calcul.

En particulier, un avantage du procédé selon l'invention réside en ce que le filtrage pour isoler les composantes spectrales à l'aide d'un filtre à deux dimensions, réel dans le domaine fréquentiel (phase nulle) et orienté dans le sens de l'information concentrique requiert moins de calculs qu'un filtre de Gabor ou qu'une décomposition en ondelettes.

Un autre avantage de la présente invention réside en ce que le filtre utilisé étant réel, il est non-déphaseur. Il n'est donc pas nécessaire d'appliquer deux filtres en quadrature et un encodeur. L'extraction des données de phase et de module est alors effectuée par démodulation, comme cela a été décrit précédemment, directement dans une image analytique obtenue par une transformée de Hilbert. Une telle séquence de transformation-démodulation est plus simple et rapide à mettre en oeuvre.

Un avantage particulier du mode de réalisation préféré de la présente invention utilisant des fenêtres de Hamming réside en ce que le filtre utilisé présente une fonction de transfert dans laquelle la fonction mathématique la plus compliquée mise en jeu est un cosinus. Ce filtre est donc particulièrement plus simple qu'un filtre de Gabor qui comporte des fonctions plus compliquées, notamment des fonctions exponentielles complexes correspondant à la somme de fonctions cosinusoïdales et sinusoïdales.

Un autre avantage d'un procédé selon la présente invention réside dans le fait qu'un même nombre de calculs peut conduire (lors de la démodulation) à des quantités d'informations différentes autorisant une fiabilité accrue selon l'application et les besoins de discriminations. En d'autres termes, le nombre d'informations discriminantes entre deux images est indépendant du nombre de calculs effectués jusqu'à la démodulation. Par rapport au procédé connu utilisant des filtres passes bandes de Gabor, cette amélioration provient notamment de ce que selon l'invention on traite l'ensemble de l'image au lieu d'un nombre de lignes et de points réduit. Ce traitement de toute l'image est possible sans accroître les temps de traitement car les traitements mis en oeuvre sont plus efficaces.

De façon générale, le procédé selon l'invention s'applique au codage d'une texture d'un élément annulaire, la texture étant caractérisée par des informations à coder qui varient essentiellement selon la position angulaire dans des cercles concentriques.

Un tel codage peut être utilisé pour détecter la présence d'une telle texture. Par exemple, dans l'industrie du bois, il permet de détecter la présence de défauts de type noeuds dans le bois lors de tests de contrôle de qualité. En effet, si le produit, par exemple une planche, ne comporte pas de défauts, l'information de texture sera homogène. Par contre, en présence d'un défaut, on observera dans l'information de fréquence une forte variation.

Dans l'application décrite précédemment de codage d'un iris, le code en module, phase et fréquence obtenu permet une reconnaissance iridienne utilisable comme paramètre de reconnaissance pour identifier un individu. Un exemple d'application est le contrôle d'accès : accès à un site physique, tel qu'une commande d'ouverture d'une porte par code, ou par carte d'accès ; accès à un compte bancaire habituellement protégé par un mot de passe ; accès à un dispositif quelconque tel qu'un ordinateur ou un téléphone portable habituellement protégé par un code à saisir. Un tel dispositif peut également remplacer l'identification par empreintes digitales ou autre identification biométrique.

Bien entendu, la présente invention est susceptible de diverses variantes et modifications qui apparaîtront à l'homme de l'art. En particulier, on a considéré en figure 3 que le procédé commence par l'acquisition de l'image d'un oeil. Toutefois, l'image peut provenir d'une base de données. Par ailleurs, on a considéré dans la description précédente que l'élément annulaire à coder présentait des limites internes et externes circulaires. De façon générale, les limites peuvent être elliptiques, pour autant que l'information caractérisante demeure variable selon la direction angulaire.

## Revendications

1. Procédé mis en oeuvre par ordinateur de codage en fréquence, module et phase d'une représentation numérique d'une image , dans le domaine spatial, d'un élément annulaire, **caractérisé en ce qu'**il comporte les étapes suivantes :

   appliquer (301) à tout point de l'élément une conversion polaire d'où il résulte que l'élément est déplié sous forme rectangulaire ;
   transférer (302), dans le domaine fréquentiel, tout point de la forme rectangulaire convertie au moyen d'une transformée de Fourier ;
   filtrer (303) les données discrètes résultant du transfert au moyen d'au moins un filtre passe-bande, réel, bidimensionnel, orienté selon l'axe des phases ;
   appliquer (304) une transformée de Hilbert aux résultats du filtrage ;
   appliquer (305) une transformée de Fourier inverse aux résultats de la transformée de Hilbert ; et
   extraire (306) des informations de phase et de module, dans le domaine spatial.

2. Procédé selon la revendication 1, **caractérisé en ce que** le filtre passe-bande, réel, bidimensionnel, orienté selon l'axe des phases est le produit de deux fenêtres de Hamming unidimensionnelles, la fonction de transfert de chacune de ces fenêtres étant nulle partout, sauf dans un domaine de fréquence restreint autour d'une fréquence centrale dans lequel son expression analytique est la suivante :

$$Y_{i,k}(f_k) = \alpha_{i,k} + (1 - \alpha_{i,k}) \cos \frac{\pi\left(f_k - fq_{i,k}\right)}{f0_{i,k}},$$

où i représente l'indice du filtre parmi une série de filtres utilisés ;
k désigne la direction de la fenêtre de Hamming considérée ;
$f_k$ est la fréquence courante ;

$\alpha_{i,k}$ est un nombre réel non nul, positif et strictement inférieur à 1 ;

$fq_{i,k}$ est la fréquence centrale du filtre monodimensionnel, passe-bande dans la direction k et d'indice i dans la série de filtres ; et

$f0_{i,k}$ fixe l'étalement spectral centré sur la fréquence $fq_{i,k}$.

3. Procédé selon la revendication 2, **caractérisé en ce que** les fenêtres de Hamming ont des coefficients $\alpha_{i,k}$ identiques.

4. Procédé selon la revendication 3, **caractérisé en ce que** les fenêtres de Hamming sont des fenêtres de Hanning pour lesquelles les coefficients $\alpha_{i,k}$ identiques valent 0,54.

5. Procédé selon la revendication 2, **caractérisé en ce que** les fenêtres de Hamming ont des coefficients $\alpha_{i,k}$ différents.

6. Procédé selon l'une quelconque des revendications 1 à 4, **caractérisé en ce que** le filtre passe-bande réel, bidimensionnel, orienté selon l'axe des phases présente une bande passante à -3 dB d'une largeur d'une octave.

7. Procédé selon les revendications 4 et 6, **caractérisé en ce que** la bande passante de chacune des fenêtres de Hamming est définie par :

$$f0_{i,k} = \frac{\pi}{3\arcos\left(\dfrac{\dfrac{1}{2} - \alpha_{i,k}}{1 - \alpha_{i,k}}\right)} fq_{i,k},$$

où arcos désigne la fonction inverse de cosinus.

8. Procédé selon l'une quelconque des revendications 1 à 6, **caractérisé en ce qu'**il consiste à appliquer trois filtres passe-bande, réels, bidimensionnels, orientés selon l'axe des informations caractéristiques de l'image rectangulaire de fréquences centrales différentes.

9. Procédé de codage, dans une image numérique, d'une texture d'un élément annulaire défini par l'inclusion d'un premier cercle de rayon relativement faible dans un second cercle de rayon relativement grand, **caractérisé en ce qu'**il consiste à mettre en oeuvre le procédé de l'une quelconque des revendications 1 à 8.

10. Procédé selon la revendication 9, **caractérisé en ce que** l'anneau est un iris d'un oeil, le premier cercle étant la pupille dudit oeil et le second cercle étant la limite entre l'iris et la cornée de l'oeil.

**Claims**

1. A computer implemented method for coding in frequency, module and phase a digital representation, in the space field, of an image of a ring-shaped element, **characterized in that** it includes the steps of:

   applying (301) to any point of the element a polar conversion, whereby the element is unfolded in rectangular form;
   transferring (302), to the frequency field, any point of the converted rectangular shape by means of a Fourier transform;
   filtering (303) the discrete data resulting from the transfer by means of at least one real, bidimensional, band-pass filter, oriented along the phase axis;
   applying (304) a Hilbert transform to the filtering results;
   applying (305) an inverse Fourier transform to the results of the Hilbert transform; and
   extracting (306) phase and module information in the space field.

2. The method of claim 1, wherein the real, bidimensional, band-pass filter oriented along the phase axis is the product of two one-dimensional Hamming windows, the transfer function of each of these windows being zero everywhere, except in a restricted frequency field around a central frequency in which its analytic expression is the following:

$$Y_{i,k}(f_k) = \alpha_{i,k} + (1 - \alpha_{i,k})\cos\frac{\pi(f_k - fq_{i,k})}{f0_{i,k}} \text{ ,}$$

where

i represents the index of the filter in a series of used filters; k designates the direction of the considered Hamming window;

$f_k$ is the current frequency;

$\alpha_{i,k}$ is a non-zero real positive number strictly smaller than 1;

$fq_{i,k}$ is the central frequency of the one-dimensional band-pass filter in direction k and of index i in the filter series; and

$f0_{i,k}$ determines the spectral spreading centered on frequency $fq_{i,k}$.

3.  The method of claim 2, wherein the Hamming windows have identical coefficients $\alpha_{i,k}$.

4.  The method of claim 3, wherein the Hamming windows are Hanning windows for which the identical coefficients $\alpha_{i,k}$ are 0.54.

5.  The method of claim 2, wherein the Hamming windows have different coefficients $\alpha_{i,k}$.

6.  The method of any of claims 1 to 4, wherein the real bidimensional band-pass filter oriented along the phase axis has a pass-band at -3 dB with a width of one octave.

7.  The method of claims 4 and 6, wherein the pass-band of each of the Hamming windows is defined by:

$$f0_{i,k} = \frac{\pi}{3 \operatorname{ar cos}\left(\dfrac{\dfrac{1}{2} - \alpha_{i,k}}{1 - \alpha_{i,k}}\right)} fq_{i,k} \text{ ,}$$

where arcos designates the inverse cosine function.

8.  The method of any of claims 1 to 6, consisting of applying three real bidimensional band-pass filters oriented along the axis of the characteristic information of the rectangular image, of different central frequencies.

9.  A method for coding, in a digital image, a texture of a ring-shaped element defined by the including of a first circle of relatively small radius in a second circle of relatively large radius, consisting of implementing the method of any of claims 1 to 8.

10. The method of claim 9, wherein the ring is the iris of an eye, the first circle being the pupil of said eye and the second circle being the limit between the iris and the eye cornea.

**Patentansprüche**

1.  Ein computerimplementiertes Verfahren zum Codieren in der Frequenz, Modul und Phase einer digitalen Darstellung, in der räumlichen Domäne bzw. Ebene und zwar eines Bildes von einem ringförmigen Element, **dadurch gekennzeichnet, dass** es die folgenden Schritte beinhaltet:

    Anwenden (301) auf jeden Punkt des Elements einer Polarumwandlung, wobei das Element in eine rechteckige Form aufgefaltet wird;
    Transferieren (302) in die Frequenzdomäne von jedem Punkt der konvertierten rechteckigen Form mittels einer Fourier-Transformation;
    Filtern (303) der diskreten Daten als Ergebnis von der Transferierung mittels wenigstens einem reellem bidimensionalen Bandpassfilter, der entlang der Phasenachse orientiert ist;

Anwenden (304) einer Hilbert-Transformation auf die gefilterten Resultate;
Anwenden (305) einer inversen Fourier-Transformation auf die Resultate der Hilbert-Transformation; und
Extrahieren (306) der Phasen- und Modulinformationen in der räumlichen Domäne.

2. Verfahren nach Anspruch 1, wobei das reell-, bidimensionale, Bandpassfilter, das entlang der Phasenachse orientiert ist, das Produkt zwei eindimensionalen Hamming-Fenstern ist, wobei die Transferfunktion bzw. Übertragungsfunktion von jedem der Fenster überall Null ist, außer in einem beschränktem Frequenzfeld, um eine zentrale Frequenz, in der ihr analytischer Ausdruck der Folgende ist:

$$Y_{i,k}(f_k) = \alpha_{i,k} + (1 - \alpha_{i,k})\cos\frac{\pi(f_k - fq_{i,k})}{f0_{i,k}},$$

wobei
i den Index des Filters in einer Serie von benutzten Filtern darstellt;
k bezeichnet die Richtung des betrachteten Hamming-Fensters;
$f_k$ die momentane Frequenz ist;
$\alpha_{i,k}$ eine nicht 0, reale positive Zahl zwingend kleiner als 1 ist;
$fq_{i,k}$ die Zentralfrequenz bzw. Mittenfrequenz des eindimensionalen
Bandpassfilters in Richtung k ist und mit dem Index i in den Filterserien; und
$f0_{i,k}$ bestimmt die spektrale Spreizung zentriert auf der Frequenz $fq_{i,k}$.

3. Verfahren nach Anspruch 2, wobei die Hamming-Fenster identische Koeffizienten $\alpha_{i,k}$ haben.

4. Verfahren nach Anspruch 3, wobei die Hamming-Fenster Hanning-Fenster sind, für die die identischen Koeffizienten $\alpha_{i,k}$ 0,54 sind.

5. Verfahren nach Anspruch 2, wobei die Hamming-Fenster verschiedenen Koeffizienten $\alpha_{i,k}$ aufweisen

6. Verfahren nach einem der Ansprüche 1 bis 4, wobei das reale bidmensionale Bandpassfilter, das entlang der Phasenachse orientiert ist, einen Passband bei -3 dB mit einer Breite von einer Oktave hat.

7. Verfahren nach den Ansprüchen 4 und 6, wobei der Passband jedes Hamming-Fensters definiert ist durch:

$$f0_{i,k} = \frac{\pi}{3ar\cos\left(\dfrac{\dfrac{1}{2} - \alpha_{i,k}}{1 - \alpha_{i.k}}\right)} fq_{i,k}$$

wobei arcos die inverse Cosinusfunktion bezeichnet.

8. Verfahren gemäß einem der Ansprüche 1 bis 6, bestehend aus Anwenden von drei realen bi-dimensionalen Bandpassfiltern, die entlang der Achse der Charakteristikinformationen des rechteckigen Bildes orientiert sind, und zwar mit verschiedenen Zentralfrequenzen bzw. Mittenfrequenzen.

9. Ein Verfahren zum Codieren, in einem digitalen Bild, von einer Textur eines ringförmigen Elements definiert durch das beinhalten eines ersten Kreises mit relativ kleinem Radius in einem zweiten Kreis mit relativ großem Radius, bestehend aus dem Implementieren des Verfahrens von einem der Ansprüche 1 bis 8.

10. Verfahren nach Anspruch 9, wobei der Ring die Iris eines Auges ist, der erste Kreis die Pupille des Auges und der zweite Kreis die Grenze zwischen der Iris und der Cornea des Auges ist.

IMAGE

101 ~ CONVERSION ⌒ 201

⌒ 202

102 ~ GABOR

103 ~ BINAR

104 ~ CODING

CODE   Fig 1

Fig 2A

Fig 2B

Re

t

Fig 2C

Im

t

Fig 2D

Re

Fig 2E

Im

Fig 2F

IMAGE

301 —◯ CONVERSION ⌇ 201

⌇ 202

302 —◯ FT

303 —◯ FILTERING

304 —◯ HILBERT

305 —◯ FT$^{-1}$

306 —◯ DEMODULATION

CODE

Fig 3

$Y_{i,k}(f_k)$

1

1/2

OCTAVE

$f_k$

$fq_{i,k}-fo_{i,k}$   $fq_{i,k}$   $fq_{i,k}+fo_{i,k}$

Fig 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.P. HAVLICEK et al.** The analytic Image. *IEEE,* 1997, 446-449
- **A. BOVIC.** Handbook of image and video processing. 2000

- **J.P. HAVLICEK et al.** Discrete quasi eigenfunction approximation for AM-FM image analysis. *IEEE,* 1996, 633-636
- **J.P. HAVLICEK et al.** The multi-component AM-FM image representation. *IEEE transactions on image processing,* Juin 1996, 1094-1096